# EUROPEAN PATENT APPLICATION

(11) **EP 1 653 399 A1**
(43) Date of publication of application: **03.05.2006**
(21) Application number: 04747381.4
(22) Date of filing: 12.07.2004
(51) Int. Cl.: G06Q 10/00

(54) **ACCOUNTING SYSTEM, CONTENT REPRODUCTION DEVICE, LICENSE SALES DEVICE, PROGRAM, AND RECORDING MEDIUM**

(30) Priority: 07.08.2003 JP 2003288460
(71) Applicant: SHARP KABUSHIKI KAISHA, Osaka-shi, Osaka 545-8522 (JP)
(72) Inventor: SHIMIZU, Yukitaka, 2750015 (JP); OHNO, Ryoji, 2700023 (JP); MATSUSHITA, Takeshi, 2660005 (JP)
(74) Representative: Brown, Kenneth Richard
(86) International application number: PCT/JP2004/009913
(87) International publication number: WO 2005/015468

(57) **Abstract**

There is provided an accounting system for accounting a content distributed by an accumulation broadcast or a removable recording medium while preventing an unauthorized use and holding privacy of a user. An accounting ID specifying the money information stored in a prepaid card is read and a content ID of the encrypted content specified by the user and the accounting ID are reported to an accounting server. Decoding information is acquired in return for the accounting and the encrypted content is decoded by using the decoding information so as to be used.

## Description

### TECHNICAL FIELD

The present invention relates generally to an accounting system, content reproduction device, license vending machine as well as a program and recording medium, and more particularly, to technology for performing accounting to information when using with a content reproduction device the information such as an image and video, music and audio or computer data and program delivered by broadcasting, multimedia network, a recording medium and the like.

### BACKGROUND OF THE INVENTION

Recently, under the rapid development of network represented by the internet, various contents such as music, images, videos and software are increasingly distributed through network or digital broadcasting.

If these contents are charged contents, problems are posed by an accounting method for collecting the fee appropriate for the provided content as well as by an unauthorized use of the content.
For example, in paid broadcasting, non-subscribers are not allowed to view programs by encrypting program contents with the use of encryption referred to as scramble.

In patent document 1, titled "Satellite Receiver Utilizing Prepaid Card", paid scrambled satellite broadcasting is made available with the use of a prepaid card. Therefore, the technology of patent document 1 has the following configuration.

When the prepaid card is inserted, a data read unit reads data of receivable channels and an amount written in the card and the content thereof is sent to a control unit.
The control unit allows specified channel to be selected based on the data and descrambles the scramble of a scramble decoder if the remaining amount of the prepaid card is sufficient for receiving the specified program.

If the program of the specified channel is pay-per-view, the role of the prepaid card is completed when the reception is ended and the card cannot be reused.
If the program is not pay-per-view, the remaining amount of the prepaid card is updated by subtracting an amount for the operating time from the current amount. When the remaining amount updated becomes a certain amount or less, on-screen display is performed.

In patent document 2, titled "Accounting Apparatus, Information Reception Apparatus and Communication System", accounting for information utilization of a user is appropriately performed while facilitating management and protecting privacy of the user in multi-network and the like. Fig. 16 is a block diagram showing a configuration example of an apparatus of patent document 2.

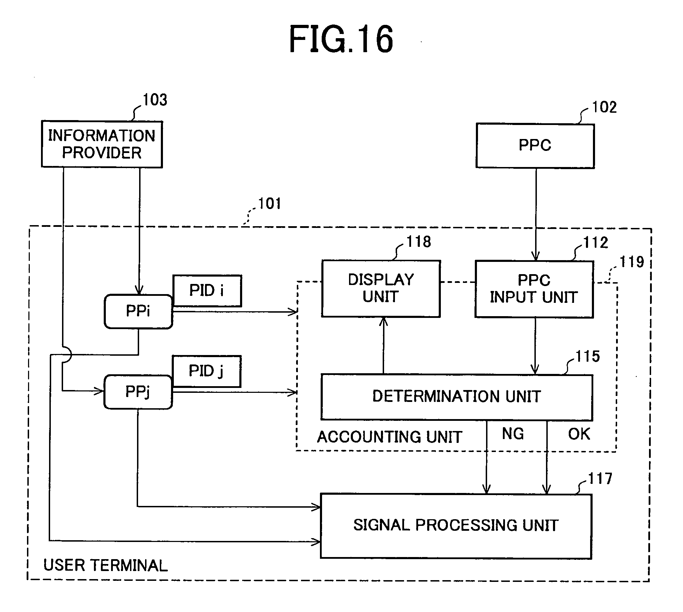

A user terminal 101 in Fig. 16 is constituted by a signal processing unit 117, an accounting unit 119, provided information (PPi or PPj) provided for profit from an information provider 103 and information specific data (PIDi or PIDj) added to the provided information.
The accounting unit 119 is constituted by a PPC input unit 112 for inputting PPC 102 which is money information recorded on a card and the like, a determination unit 115 and a display unit 118.

Then, the operation is described. The information provider 103 provides the provided information PP including PID. The user terminal 101 is configured such that the accounting unit 119 is passed through without fail when utilizing the provided information PP.

The accounting unit 119 has the PPC input unit 112 as a reception port for the PPC 102 which is money information. When a request is generated for utilizing the provided information PP, the determination unit 115 checks availability of the provided information PP based on PID and/or PPC (prepaid card). For example, it is checked whether the usage fee indicated in PID is within the remaining amount indicated by the money information of PPC.

The determination result of the determination unit 115, i.e., whether the utilization is permitted (OK) or not (NG) is notified to the signal processing unit 117, and if it is OK, the signal processing unit 117 processes and outputs the provided information PP so as to be utilized by the user. The information of the PID or PPC (e.g., the usage fee of the provided information and the remaining amount of the PPC) at this point is displayed on the display unit 118.
The determination result of the determination unit 115 with regard to the availability can also be displayed on the display unit 118.
Patent document 1: Japanese Laid-Open Patent Publication No. H05-207464
Patent document 2: Japanese Laid-Open Patent Publication No. 2001-147976

### DISCLOSURE OF THE INVENTION

### PROBLEMS TO BE SOLVED BY THE INVENTION

In the technology of patent document 1 described above, since a means does not exist for feeding back what program (content) is utilized to the program provider side, profits cannot be distributed appropriately to the program providers, and since preferences of viewers are not known, the technology cannot contribute to quality improvement of the broadcasting content for broadcast stations and program creators.

In the technology of patent document 2, since a information provider is notified of a usage fee of provided information used by a user, the fees can be distributed appropriately to the information providers.
However, since the user can accumulate the information provided and can execute decode processing only with a user terminal, a user terminal illegally using the accumulated provided information can be created.

The present invention was conceived in consideration of the above current situations, and it is therefore an object of the present invention to provide an accounting system, content reproduction device, license vending machine as well as a program and recording medium which can feed back usage conditions of provided information to a provider of the information while maintaining privacy of a user and preventing an unauthorized utilization of the provided information.

### MEANS FOR SOLVING THE PROBLEMS

In order to solve problems described above, an accounting system of the present invention is constituted at least by a prepaid card, a license server, an accounting server and a content reproduction device.
The prepaid card records a unique accounting ID for identifying money information.
The accounting server manages money information (mainly, remaining amount information) for each accounting ID and executes accounting processing for a specified accounting ID in response to a request from the license server to return an accounting result.
The license server manages decoding information for decoding an encrypted content and accounting information of each content correspondingly to a content ID for identifying a content and returns the decoding information for a requested content if accounting can be performed, in response to a request from the content reproduction device.
For an encrypted content specified by a user when utilizing an encrypted content received through broadcasting or multi-media network or the same encrypted content recorded on a removable recording medium, the content reproduction device transmits an accounting ID and a content ID recorded on the prepaid card to obtain the decoding information from the license server, and the encrypted content is decoded with the decoding information so as to be used.

In the accounting system configured as described above, the user uses the encrypted content as follows.
The user specifies a content ID of an encrypted content desired to be used and the content reproduction device reads the prepaid card.
The content reproduction device notifies the license server of the specified content ID and the accounting ID of the prepaid card.
The license server obtains an accounting amount corresponding to the received content ID and transmits the accounting ID and the accounting amount to the accounting server to inquire whether the accounting will succeed.
The accounting server subtracts the accounting amount from the remaining amount corresponding to the received accounting ID and returns the success as an accounting result to the license server. If the remaining amount is lower than the accounting amount, the failure is returned to the license server as the accounting result.
When receiving the success of the accounting, the license server picks up and returns the decoding information corresponding to the content ID to the content reproduction device.
The content reproduction device uses the returned decoding information to decode the encrypted content and the user can use the content.

Also, the accounting system of the present invention is constituted at least by a content reproduction device, a license server, an accounting server, a license card and a license vending machine.
The license vending machine reads the license card, and if decoding information does not exist for a content ID identifying an encrypted content, the license vending machine reads out an accounting ID identifying money information and the content ID from the license card, transmits the content ID and the accounting ID to obtain the decoding information from the license server, and records the decoding information onto the license card correspondingly to the content ID.
The content reproduction device reads the license card, obtains the decoding information corresponding to the content ID identifying the encrypted content and decodes the encrypted content with the decoding information.
The license server transmits an accounting amount obtained from the received content ID and the accounting ID to obtain an accounting result from the accounting server, and if the accounting result is the success of the accounting, the license server returns the decoding information corresponding to the content ID.
If money information corresponding to the received accounting ID is larger than the received accounting amount, the accounting server subtracts the accounting amount from the money information and returns the success of the accounting.

The license server described above may not have the accounting information for the content and the whole accounting processing may be executed by the accounting server.
Also, in the accounting system described above, expiration dates may be set to the accounting ID and/or the decoding information.
Also, the license server can record the content ID of the content used for each accounting ID or the number of times of usage for each content ID, which can be utilized as the usage history.

### EFFECT OF THE INVENTION

By configuring the present invention as described above, since a prepaid card and license card of the present invention do not have money information and the money information is recorded in an accounting server separated from these cards, although a magnetic prepaid card such as a telephone card can be counterfeited and used by only falsifying the card side, the prepaid card and license card according to the present invention cannot be used exceeding an remaining amount of a relevant accounting ID recorded in the accounting server even though the card may be counterfeited. Also, in the case such that the accounting ID is leaked out, processing for disabling the accounting ID can be performed in the relevant accounting server.

Also, by performing retention of decoding information and decoding processing separately, since a content reproduction device cannot use the content by itself, a user cannot illegally use the content and a manufacturer of the content reproduction device cannot manufacture the content reproduction device for using the content illegally.

Further, information relating to the content provided to a user for each accounting ID (e.g., usage history and the like) can be fed back to the content provider thereof. However, since a means does not exist for linking the accounting ID and the user, privacy of the user can be maintained.
With this feedback, fees can be distributed appropriately to content providers. Also, since the number of times of content usage can be known, the content provider can plan to improve the quality of the contents.

### BRIEF DESCRIPTION OF THE DRAWINGS

Fig. 1 is a block diagram showing a configuration of an accounting system according to an embodiment 1.
Fig. 2 is a detailed block diagram showing a configuration of an accounting system according to an embodiment 1.
Fig. 3 is an example of a data structure of contents accumulated into an accumulation unit of a content reproduction device.
Fig. 4 is an example of a data structure of a price table making correspondence among content ID, decoding information and prices retained by a license server.
Fig. 5 is an example of a data structure of an accounting table making correspondence between accounting ID and money information retained by an accounting server.
Fig. 6 is a diagram for describing encryption and decoding used in the embodiments.
Fig. 7 is a flowchart showing a processing procedure of an accounting system according to the embodiment 1.
Fig. 8 is a detailed block diagram showing a configuration of an accounting system according to an embodiment 2.
Fig. 9 is a block diagram showing a configuration of an accounting system according to an embodiment 3.
Fig. 10 is a detailed block diagram showing a configuration of an accounting system according to an embodiment 3.
Fig. 11 is a flowchart showing a content decoding procedure of the content reproduction device in the case of using a license card.
Fig. 12 is a flowchart showing a processing procedure when purchasing a desired license from a license vending machine.
Fig. 13 is an example of a data structure of an accounting table making correspondence among accounting ID, money information and expiration dates retained by an accounting server.
Fig. 14 is an example of a data structure of usage histories relating to content ID and accounting ID.
Fig. 15 is an example of a data structure of a price table making correspondence among content ID, decoding information, prices and expiration dates retained by a license server.
Fig. 16 is a block diagram showing a configuration of a conventional accounting apparatus.

### PREFERRED EMBODIMENTS OF THE INVENTION

Preferred embodiments of the present invention will now be described with reference to the drawings.

### <Embodiment 1>

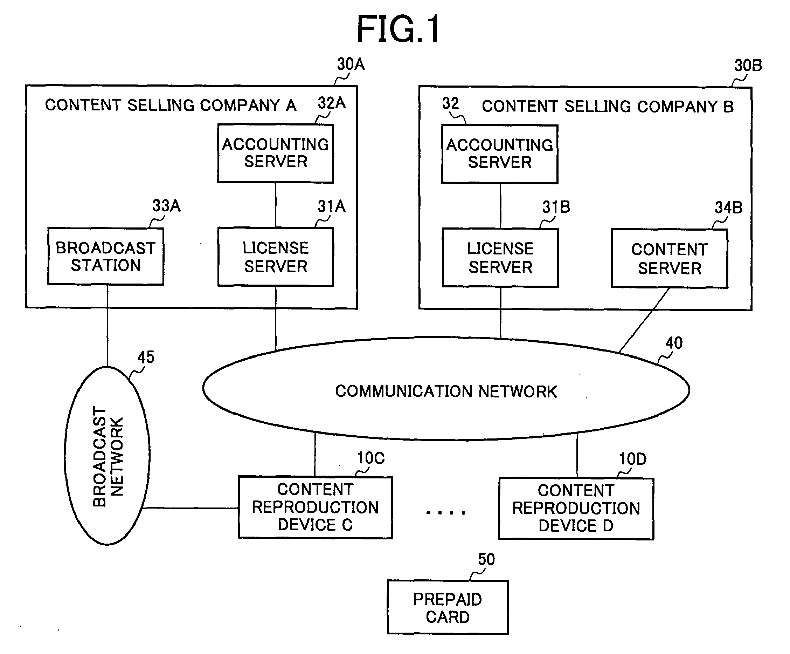

Fig. 1 is a block diagram for describing an overall configuration of an accounting system according to an embodiment 1 of the present invention. In the figure, the accounting system consists of content reproduction devices 10, a prepaid card 50, content selling companies 30, communication network 40 and broadcast network 45. A plurality of the content reproduction devices 10 and a plurality of content selling company 30 are connected to the communication network 40 such as the internet as needed.

The content reproduction device 10 may obtain contents via the broadcast network 45 or may obtain contents through the communication network 40.

The content selling company 30A is a company selling encrypted contents broadcasted over digital broadcasting. Therefore, the content selling company 30A is equipped with a license server 31A, an accounting server 32A and a broadcast station 33A.
The broadcast station 33A performs digital broadcasting through the broadcast network 45 to sell encrypted contents (program, music, image, video, software and the like).
The license server 31A is connected to the communication network 40, checks payment from a user who purchases the content and returns decoding information for decoding the encryption.
The accounting server 32A is connected to the license server 31A via communication network such as LAN (local area network) and responds to an inquiry of whether payment can be performed for a user or not, from the license server 31A.
When data are given and received among the content reproduction devices 10, the license server 31 and the accounting server 32, preferably, the data are encrypted.

The content selling company 30B is a company selling encrypted contents (music, image, video, software and the like) through the communication network 40. Therefore, the content selling company 30B is equipped with a license server 31B, an accounting server 32B and a content server 34B.
The content server 34B sells the encrypted contents held in the server through the communication network 40. Alternatively, the encrypted contents may be distributed without charge. The license server 31B and the accounting server 32B are provided with the same functions as the license server 31A and the accounting server 32A described above and descriptions thereof are omitted here.

A user receives the encrypted content and additional information thereof broadcasted by the broadcast station 33A over digital broadcasting, which are accumulated into a recording medium of the content reproduction device 10. Also, the user downloads the encrypted content and additional information thereof held by the content server 34B, which are accumulated into a recording medium of the content reproduction device 10.

In order to pay for the downloaded encrypted content, the user has purchased the prepaid card 50 recording a unique accounting ID made correspond to a payment amount from a preliminary specified store in alliance with the content selling company. In the case such that the license server 31 does not correspond one-on-one with the accounting server 32, i.e., if the company operating the license server 31 makes a contract with a plurality of companies selling the prepaid card, an identifier for identifying the accounting server 32 is written into the prepaid card along with the accounting ID. Although the accounting ID written into the prepaid card is uniquely defined, privacy of the user is assured since the accounting ID is not information making the accounting ID correspond to privacy of the user.

The store of the prepaid card registers this accounting ID and an amount in a corresponding manner as an accounting table into the accounting server 32 of the allied content selling company 30.
When the user purchases the prepaid card 50, the user may use a terminal connected to the communication network 40 to access directly to the accounting server 32 for the purchase.

The remaining amount of the purchased prepaid card 50 can be checked by notifying the accounting ID from the content reproduction device 10 to the accounting server 32 to perform an inquiry.
The remaining amount can be checked by the accounting server 32 obtaining money information from the accounting ID with reference to the accounting table and returning the money information to the content reproduction device 10. The inquiry to the accounting server 32 may be performed via the license server 31.
To add the money information to the remaining amount of the prepaid card 50, the accounting table of the accounting server 32 is updated based on money or electronic information equivalent to money.

On this configuration, the user sets the purchased prepaid card 50 into the content reproduction device 10 and specifies the accounting ID (and the identifier for identifying the accounting server) recorded on the prepaid card 50 and identification information for identifying the encrypted content to access the license server 31, and the license server 31 requests the accounting server 32 for inquiring whether the accounting can be performed or not. The accounting server 32 reduces the remaining amount for the relevant accounting ID to perform the accounting processing and returns whether the accounting processing succeeds or not.

If the accounting processing is successfully completed, the license server 31 returns decoding information for decoding the encrypted content to the content reproduction device 10.
With this return, the content reproduction device 10 obtains the decoding information of the encryption, decodes the downloaded encrypted content with this decoding information and provides the decoded content to the user.

Although the license server 31 and the accounting server 32 are described as equipment of the content selling company, the license server 31 and the accounting server 32 may be equipment of a consignment operating company of the selling company. Also, the license server 31 and the accounting server 32 may belong to separate operating companies. In this way, since the equipment of the content selling company A is only the broadcast station 33 and the content selling company B can delegate all the operations to an outside operating company, each content selling company's burden can be reduced for the equipment.
In the case of outsourcing the accounting server 32, a fee corresponding to the value is paid to the content selling company with the accounting withdrawal request from the license server 31.

For example, if the prepaid card 50 is sold and if the company operating the accounting server 32 makes a contract with each content selling company to associate the license server 31 with the accounting server 32, the user can purchase only one prepaid card 50 to purchase the content of each company.

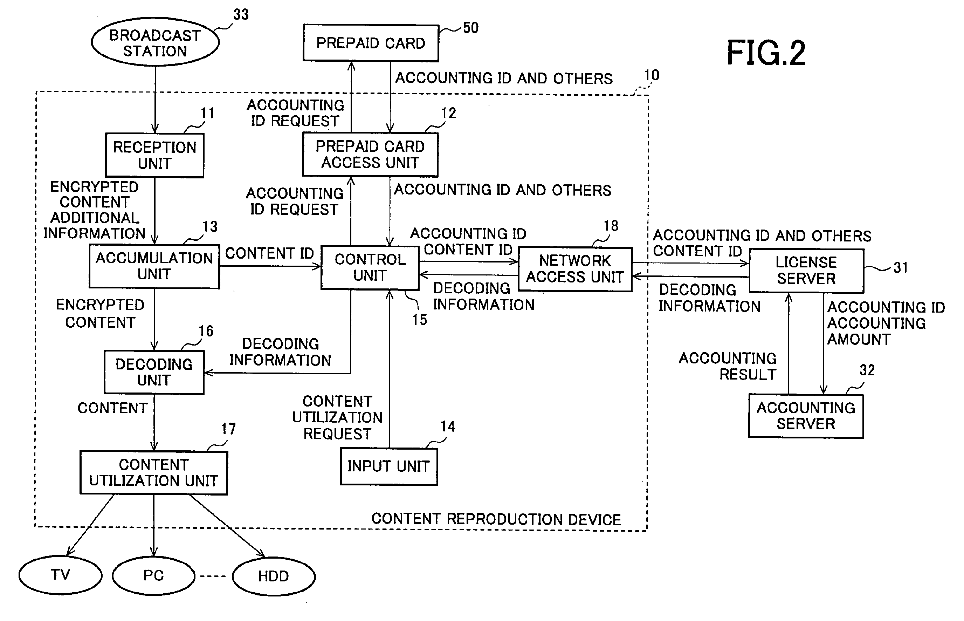

Fig. 2 is a detailed block diagram showing a configuration of the accounting system according to the embodiment 1.
In Fig. 2, the content reproduction device 10 includes a reception unit 11, a prepaid card access unit 12, an accumulation unit 13, an input unit 14, a control unit 15, a decoding unit 16, a content utilization unit 17 and a network access unit 18. Also, the content reproduction device 10 is connected to the license server 31 via the communication network 40, and the license server 31 is connected to the accounting server 32 via the communication network 40. The communication network connecting the license server 31 and the accounting server 32 may be different from the communication network connecting the content reproduction device 10 and the license server 31.
When data are given and received among the content reproduction devices 10, the license server 31 and the accounting server 32, preferably, the data are encrypted.

The reception unit 11 has a configuration equivalent to a BS/CS digital broadcasting receiver and performs synchronization and descrambling processing to receive a content broadcasted from the broadcast station.
When transmitting a content, the broadcast station 33 transmits the encrypted content and additional information. The encrypted content is encrypted with public key encryption and the encryption is performed separately from Multi-2 scrambling which is widely used in BS/CS digital broadcasting. The additional information of the content includes the following information.

Title: information for the user identifying the content. The information is used by a user interface of the content reproduction device.
Content ID: information which is used on the content provider side for identifying the content.
License server URI: URI (Uniform Resource identifier) of the license server to which the content reproduction device makes a license purchase application for the content.

In the embodiment 1, although the scrambling is not necessarily needed, if the broadcasting is performed with Multi-2 scrambling, the encrypted content and additional information are scrambled and broadcasted. When receiving this broadcasting, the reception unit 11 performs descrambling with Multi-2 to pick up the encrypted content and additional information.

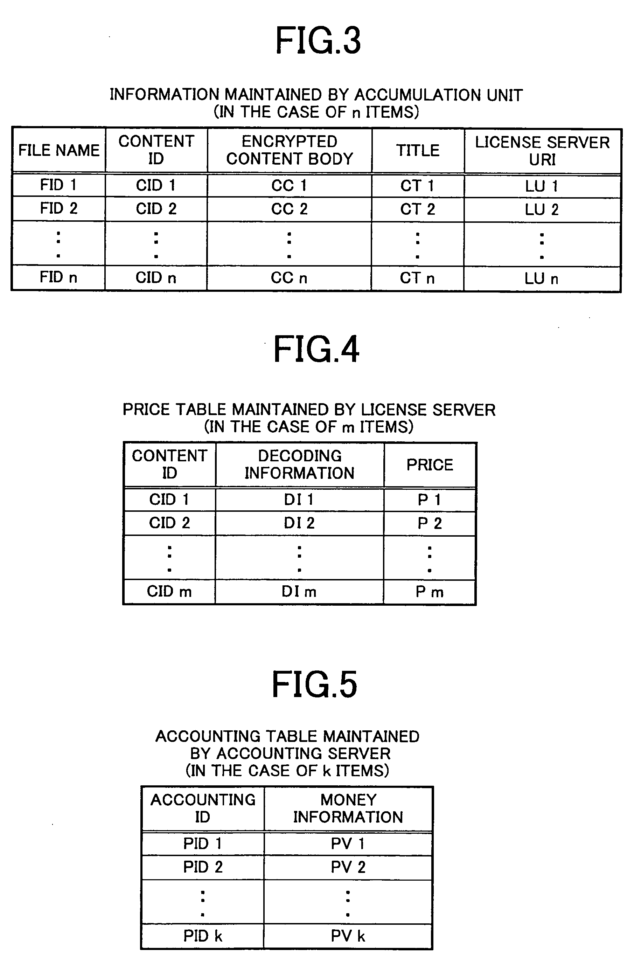

The accumulation unit 13 is a recording medium built into the content reproduction device 10, which adds a file name to and stores the received encrypted content and additional information. As shown in Fig. 3, information accumulated in the accumulation unit 13 includes a file name (FID), a content ID (CID), an encrypted content body (CC), a content title (CT), a license server URI (LU) and others per content.

Configurations of the reception unit 11 and the accumulation unit 13 are basically the same as the accumulation broadcasting conducted in CS digital broadcasting and, therefore, descriptions thereof are omitted.

The input unit 14 inputs a request from a user and gives the content utilization request to the control unit 15. For example, by displaying a title in the additional information of each content accumulated in the accumulation unit 13 and by specifying a desired content from the titles, the input unit 14 gives to the control unit 15 the content ID (CID) of that content and the license server URI of the content seller.

When the user sets the prepaid card 50 into the content reproduction device 10, the prepaid card access unit 12 reads and gives to the control unit 15 the accounting ID written into this prepaid card 50. In the case such that the license server 31 does not correspond one-on-one with the accounting server 32, an identifier for identifying the accounting server 32 is read as well.

The network access unit 18 receives the accounting ID (and the identifier of the accounting server), the content ID and the license server URI from the control unit 15 and accesses the received license server URI to send the accounting ID (and the identifier of the accounting server) and the content ID.
Also, if the accounting processing succeeds, the network access unit 18 receives decoding information from the license server 31 which is given to the control unit 15. However, if the accounting processing does not succeed due to insufficiency of the remaining amount or the like, the network access unit 18 gives a received failure notification and a reason thereof to the control unit 15.

The control unit 15 receives from the network access unit 18 the decoding information which is given to the decoding unit 16.
The decoding unit 16 decodes with this decoding information the specified encrypted content picked up from the accumulation unit 13, which is given to the content utilization unit 17.
Based on the request from the user, the content utilization unit 17 regenerates the content with, for example, a television, a computer or the like or stores the content into the recording medium such as a hard disk or the like. The utilization of the decoded content is the same as the current accumulation broadcasting and, therefore, a description is omitted.

On the other hand, if the control unit 15 receives a failure notification from the network access unit 18 due to failure of the accounting or the like, the user receives a display or audio notification explaining a reason why the content cannot be used.

When receiving the content ID and the accounting ID (and the identifier of the accounting server) from the content reproduction device 10, the license server 31 refers to a content price table (see Fig. 4) to retrieve a corresponding content price from the content ID and obtains accounting information with a commission charge, consumption tax and others added. In this price table, the decoding information of the encrypted content, a price of the content and others are registered correspondingly to the content ID.

After obtaining the accounting information, the license server 31 sends the accounting ID and the accounting information to the accounting server 32.
If an identifier of the accounting server is specified, URI of the accounting server is obtained by referring to identifiers of contracted accounting servers registered into the license server 31. If the identifier of the accounting server notified from the content reproduction device 10 is URI, the accounting server can be directly called without conversion.
At this point, after obtaining the accounting information, instead of immediately sending to the accounting server 32, the accounting information may be presented to the content reproduction device 10 to ask for user's permission for the accounting, and the accounting ID and the accounting information may be sent to the accounting server 32 as soon as the permission is input by the user.

The license server 31 receives a result of the accounting processing from the accounting server 32, and if the accounting processing succeeds, the license server 31 obtains corresponding decoding information from the content ID and returns the decoding information to the content reproduction device 10.
If the accounting processing does not succeed, a notification of the failure of the accounting is returned to the content reproduction device 10, along with a reason such as insufficiency of the amount.

The accounting server 32 receives the accounting ID and the accounting information from the license server 31, reduces the relevant remaining amount of the accounting ID with reference to the accounting table (see Fig. 5) and returns the result of the successful accounting to the license sever 31. The price table maintains money information (a remaining amount) correspondingly to the accounting ID.
If the money information corresponding to the accounting ID is lower than the accounting information sent from the license server 31, shortage of the remaining amount for the purchase price is returned to the license server 31 along with the failure notification.

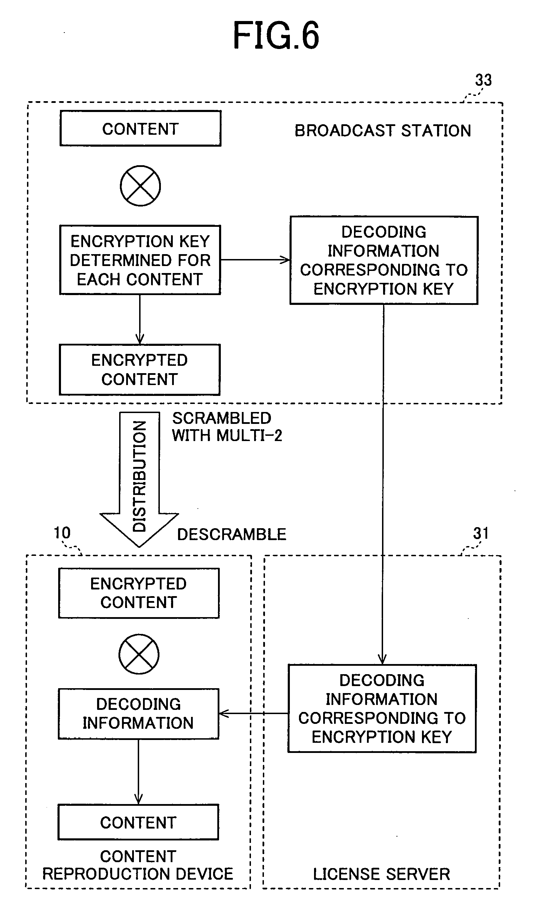

Then, encryption and decoding used in the embodiment 1 are described using Fig. 6.
The content possessed by the content selling company (e.g., broadcast station) is encrypted with an encryption key determined appropriately for each content. As this encryption scheme, an encryption scheme using a common key can be used, such as Triple-DES (Data Encryption Standard).

The decoding information corresponding to this encryption key (in the case of Triple-DES, same as the encryption key) is recorded in the license server 31.
When the encrypted content is distributed, although the content may be scrambled with Multi-2, this scrambling is performed separately from the encryption described here and the multi-2 scrambling is descrambled at the time of reception.

The content reproduction device 10 can decode the received encrypted content with the decoding information obtained from the license server 31 to obtain the usable content.

In the configuration of the prepaid card and the content reproduction device as described above, since the (encrypted) content broadcasted by BS/CS digital broadcasting is received and accumulated and the decoding information needed to use the encrypted content can be obtained from the license server after the accounting processing is performed based on the instruction from the user, an unauthorized use is difficult.

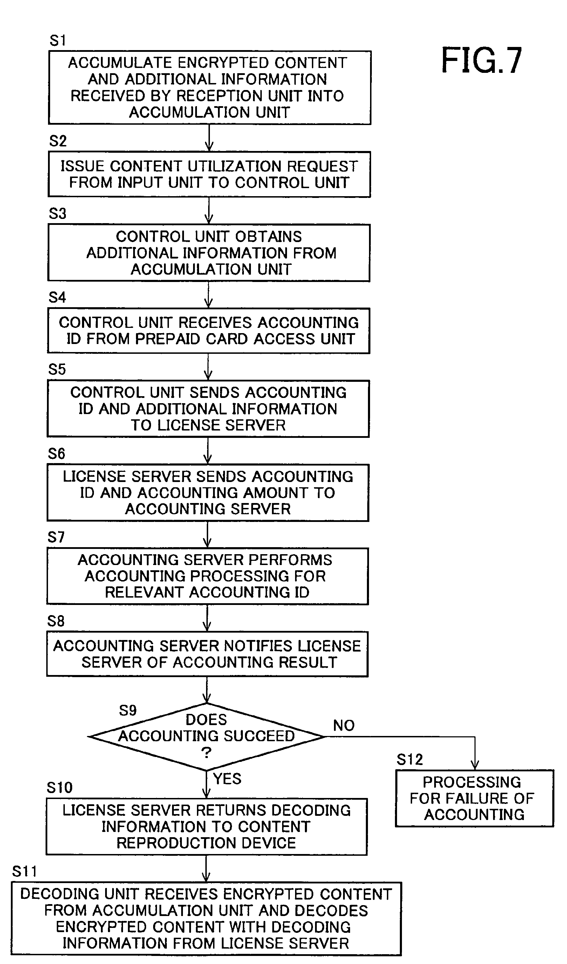

Then, a processing flow in the accounting system according to the embodiment 1 is described based on a flowchart of Fig. 7.
The broadcasted encrypted content and additional information are received by the reception unit 11 and the encrypted content and additional information (content ID, license server URI and others) are accumulated in the accumulation unit 13 (step S1). If the broadcasted encrypted content and additional information are scrambled, the broadcasted encrypted content and additional information are accumulated in the accumulation unit 13 after being descrambled by the reception unit 11.

A utilization request for the desired content of the user is input into the input unit 14 and the content utilization request is given to the control unit 15 (step S2).
The control unit 15 obtains the additional information of the content requested to be used from the accumulation unit 13 (step S3).
When the prepaid card 50 is set, the control unit 15 obtains the accounting ID (and the identifier of the accounting server) read by the prepaid card access unit 12 (step S4).
The control unit 15 sends the accounting ID (and the identifier of the accounting server) and the content ID via the network access unit 18 to the license server 31 indicated by the license server URI (step S5).

The license server 31 obtains accounting information (an accounting amount) from the content ID with reference to the price table and sends the accounting ID and the accounting information to the specified accounting server 32 (step S6).
At this point, after obtaining the accounting information, instead of immediately sending to the accounting server 32, the accounting information may be presented to the content reproduction device 10 to ask for user's permission for the accounting, and the accounting ID and the accounting information may be sent to the accounting server 32 as soon as the permission is input by the user.

The accounting server 32 refers to the relevant accounting ID on the accounting table to perform the accounting processing (step S7) and notifies the license server 31 of an accounting result (step S8).
If the specified accounting information is larger than the remaining amount, the result of the accounting processing is the failure of the accounting processing, or if the remaining amount is larger, the accounting information is subtracted from the remaining amount in the accounting table, the accounting table is updated and the result of the accounting processing will be the success of the accounting.

The license server 31 determines from the accounting result whether the accounting succeeds or not, and if the accounting succeeds (YES in step S9), the decoding information is returned to the content reproduction device 10 (step S10).
If the decoding information is obtained, the content reproduction device 10 decodes the encrypted content picked up from the accumulation unit 13 with the decoding unit 16 using the decoding information and uses the decoded content with a TV, computer and the like (step S11).
On the other hand, if the accounting fails (NO in step S9), the license server 31 returns the failure of the accounting to the content reproduction device 10 and performs processing at the time of the failure of the accounting, such as presenting to the user an error message indicating such that the amount possessed by the user is lower than the purchased amount of the content (step S12).

In above descriptions, although the encrypted content handled by the content reproduction device 10 is described as a program and the like broadcasted by BS/CS digital broadcasting, the same handling can be applied to when obtaining music, videos, images, software and others distributed from the content server 34 via the communication network.
In this case, the reception unit 11 is configured to receive the encrypted content and additional information thereof from the content server 34 via the communication network 40, which are accumulated into the accumulation unit 13.

### <Embodiment 2>

Although the above-mentioned embodiment 1 is described with an example of the content broadcasted by the accumulation broadcasting or the content distributed through multimedia network, the content can be distributed using a removable recording medium.
In the embodiment 2, descriptions are made for the case of recording the encrypted content and additional information thereof (content ID, title, license server URI and the like) onto a recording medium such as a removable hard disk, CD, DVD or the like in a manner similar to the recording into the accumulation unit 13 in the embodiment 1 described above.

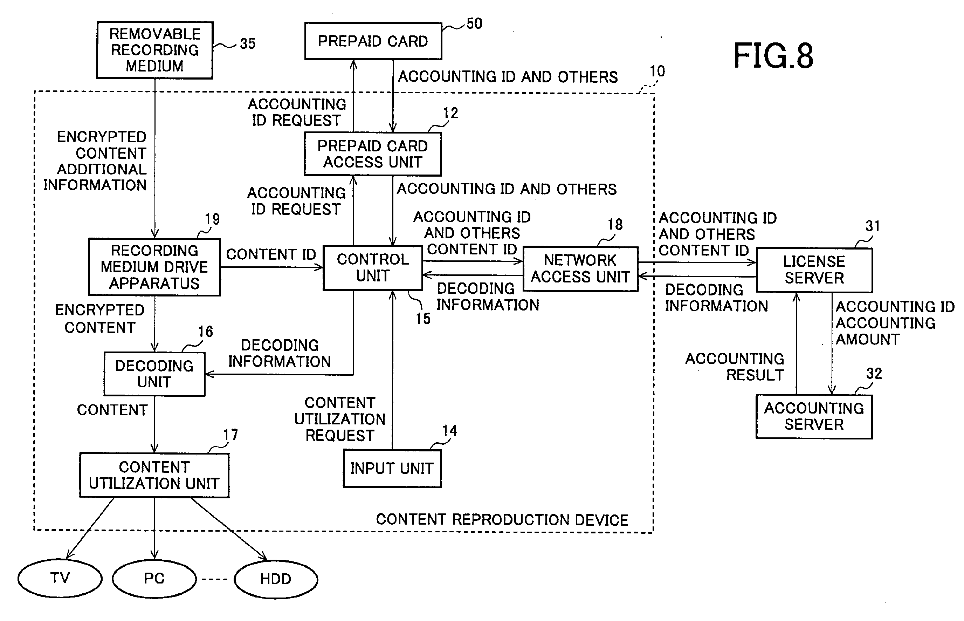

Fig. 8 is a detailed block diagram for describing an accounting system according to the embodiment 2. In Fig. 8, a content reproduction device 10 includes a prepaid card access unit 12, a recording medium drive apparatus 19, an input unit 14, a control unit 15, a decoding unit 16, a content utilization unit 17 and a network access unit 18.
Also, the content reproduction device 10 is connected to a license server 31 via communication network 40, and the license server 31 is connected to an accounting server 32 via the communication network 40.
When data are given and received among the content reproduction devices 10, the license server 31 and the accounting server 32, preferably, the data are encrypted.
In Fig. 8, components having the same functions as the embodiment 1 are added with the same symbols and are described only for differences.

In the case of the embodiment 2, first, a content user loads a recording medium recording the encrypted content and additional information thereof into the recording medium drive apparatus 19 provided in the content reproduction device 10.
The input unit 14 inputs a utilization request for the desired content of the user, which is given to the control unit 15.
The control unit 15 picks up the specified content and additional information thereof from the recording medium loaded into the recording medium drive apparatus 19 and accesses the license server 31 via the network access unit 18 using the accounting ID (and the identifier of the accounting server) recorded on the prepaid card 50 to receive the decoding information.
The decoding unit 16 decodes the encrypted content using this decoding information and the content is used by watching and listening to a video, music or a TV program on a TV or computer or by storing into a hard disk or the like with the content utilization unit 17.
Details of other functions are the same as the embodiment 1 and descriptions are omitted.

By configuring the embodiment 2 as described above, since a portable recording medium recording the content can be used, the content can be distributed to an area where the content is not broadcasted or can be sold along with a book.

### <Embodiment 3>

In the embodiment 1 and the embodiment 2, the decoding information is obtained from the license server with the use of the accounting ID recorded on the prepaid card. In the embodiment 3, descriptions are made for the case of recording and using the decoding information on the license card.

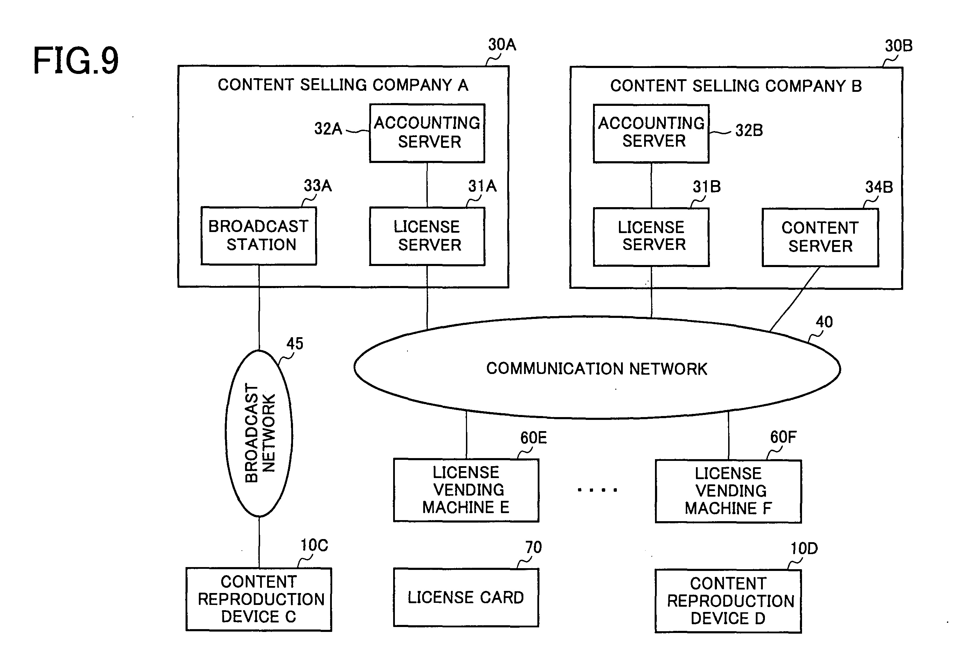

Fig. 9 is a block diagram for describing an overall configuration of an accounting system according to the embodiment 3 of the present invention. In the figure, the accounting system consists of a content reproduction device 10, a license card 70, license vending machines 60, content selling companies 30, communication network 40 and broadcast network 45. The license vending machines 60 and the content selling companies 30 are connected via the communication network 40 and the content reproduction device 10 connects to the broadcast network 45 and the communication network 40 as needed.

Hereinafter, portions of Fig. 9 having the same functions as the embodiment 1 (Fig. 1) are added with the same symbols; descriptions for those portions are omitted; and only differences thereof are described.

First, as is the case with the embodiment 1, a user receives the encrypted content and additional information thereof broadcasted by digital broadcasting of the broadcast station 33A or downloads the encrypted content and additional information thereof held by the content server 34B to store into a recording medium of the content reproduction device 10. Alternatively, as is the case with the embodiment 2, the user purchases or receives provision of a recording medium recording the encrypted content and additional information thereof.

Then, in order to obtain the decoding information for decoding the encrypted content, the user purchases the license card 70 recording a unique accounting ID made correspond to the paid amount from a preliminary specified store in alliance with the content selling company. In the case such that the license server 31 does not correspond one-on-one with the accounting server 32, i.e., if the company operating the license server 31 makes a contract with a plurality of companies selling the license card, an identifier for identifying the accounting server 32 is written into the license card along with the accounting ID.

The store registers this accounting ID and an amount in a corresponding manner into the accounting server 32 of the allied content selling company 30.
When the user purchases the license card 70, the user may use a terminal connected to the communication network 40 to access directly the accounting server 32 for the purchase.

The remaining amount of the purchased license card 70 can be checked by notifying the accounting ID from the license vending machine 60 to the accounting server 32 to perform an inquiry.
The remaining amount can be checked by the accounting server 32 obtaining money information from the accounting ID with reference to the accounting table and returning the money information to the license vending machine 60.
The inquiry to the accounting server 32 may be performed via the license server 31.
To add the money information to the remaining amount of the license card 70, the accounting table of the accounting server 32 is updated based on money or electronic information equivalent to money.

On this configuration, the user sets the purchased license card 70 into the license vending machine 60 and selects the desired content from contents displayed on the license vending machine 60.
The license vending machine 60 accesses the license server 31 using identification information of the content specified by the user and the accounting ID (and the identifier for identifying the accounting server) recorded on the license card 70.
The license server 31 refers to a price table, aggregates a content price corresponding to the content ID, commission charge, consumption tax and others to obtain accounting information and requests the accounting server 32 for inquiring whether the accounting can be performed or not.
At this point, after obtaining the accounting information, instead of immediately sending to the accounting server 32, the accounting information may be presented to the content reproduction device 10 to ask for user's permission for the accounting, and the accounting ID and the accounting information may be sent to the accounting server 32 as soon as the permission is input by the user.
The accounting server 32 reduces the remaining amount for the relevant accounting ID to perform the accounting processing and returns whether the accounting processing succeeds or not.

If the accounting processing is successfully completed, the license server 31 returns the decoding information for decoding the encrypted content to the license vending machine 60.
The license vending machine 60 makes correspondence between this returned decoding information and the content ID of the content specified by the user earlier, which are written into the license card 70 for provision to the user.

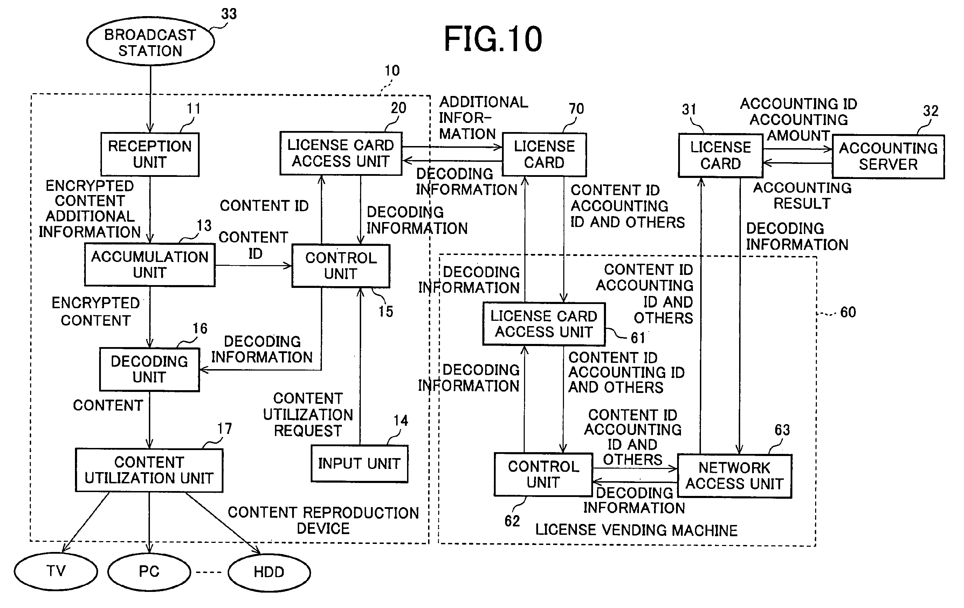

Fig. 10 is a detailed block diagram for describing the accounting system according to the embodiment 3. In the figure, the content reproduction device 10 includes a reception unit 11, a license card access unit 20, an accumulation unit 13, an input unit 14, a control unit 15, a decoding unit 16 and a content utilization unit 17.
The license vending machine 60 is constituted by a license card access unit 61, a control unit 62 and a network access unit 63.
In Fig. 10, portions having the same functions as Fig. 2 are added with the same symbols; descriptions for functions thereof are omitted; and hereinafter, only differences are described.

The content reproduction device 10 and the license vending machine 60 give and receive the decoding information via the license card 70. The license vending machine 60 connects to the communication network 40 via the network access unit 63 to obtain the decoding information from the license server 31.
Also, the license server 31 is connected to the accounting server 32 via the communication network 40. The communication network connecting the license server 31 and the accounting server 32 may be different from the communication network connecting the license vending machine 60 and the license server 31.
When data are given and received among the license vending machine 60, the license server 31 and the accounting server 32, preferably, the data are encrypted.

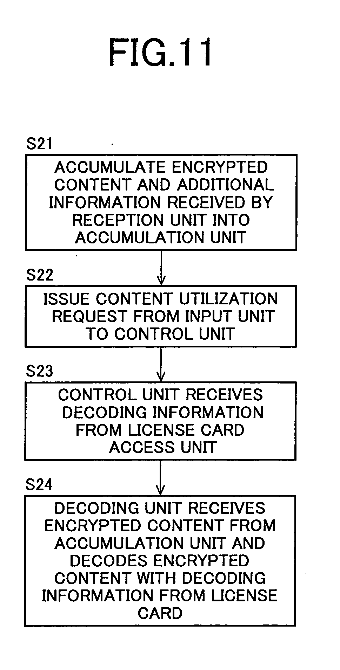

Then, with the reference to a flowchart of Fig. 11, descriptions are made for a content decoding procedure of the content reproduction device 10 in the case of using the license card 70 recording the decoding information corresponding to the content.
First, the encrypted content and additional information received by the reception unit 11 from the broadcast station 33 are accumulated in the accumulation unit 13 (step S21).

Then, the user uses the input unit 14 to obtain additional information of the contents accumulated in the accumulation unit 13, displays a title list or the like included in the additional information and selects the content desired to be decoded from the title list or the like (step S22).

Then, when the user sets the license card 70 into the content reproduction device 10, the control unit 15 calls the license card access unit 20 to read the decoding information corresponding to the specified content recorded on the license card 70 (step S23).
If the decoding information of the specified content is not recorded on the license card 70, the content ID of the content is written onto the license card 70. Unless the purchased decoding information is written onto this license card 70 using the license vending machine 60, the content cannot be used.

The control unit 15 receives the encrypted content of the specified content from the accumulation unit 13, calls the decoding unit 16 to decode the encrypted content with the decoding information read from the license card 70 (step S24) so as to be used by watching and listening to a video, music or a TV program on a TV or computer or by storing into a hard disk or the like with the content utilization unit 17.

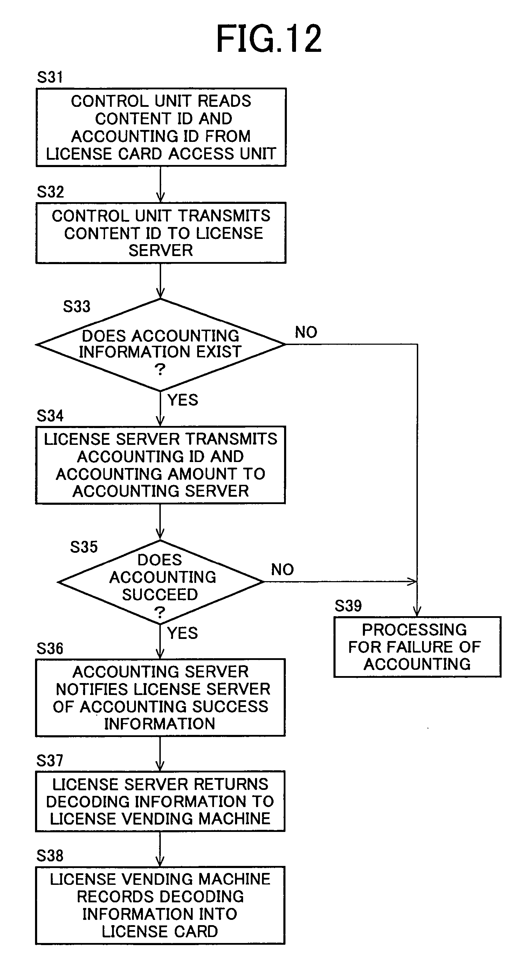

Then, with the use of a flowchart of Fig. 12, descriptions are made for a processing procedure when purchasing a desired license from the license vending machine 60.
In the license vending machine 60, when the user sets the license card 70, the license card access unit 61 reads the accounting ID (and the identification information of the accounting server) recorded on the license card 70, the content ID recorded on the license card 70 and the decoding information corresponding to the content (step S31).

The control unit 62 displays a list or the like of information about content IDs which do not have the corresponding decoding information among the read contents to allow the user to select the content ID for which the user want to purchase a license. Alternatively, if nothing is recorded on the license card 70 in terms of contents, a list or the like of contents held by the license vending machine 60 may be displayed to make the content to be purchased chosen from the list, or a list of the contents recorded on the license card 70 may be displayed along with the contents held by the license vending machine 60 as a list.

The control unit 62 transmits the content ID of the content specified by the user in this way and the accounting ID (and the identification information of the accounting server) to the license server 31 corresponding to the license vending machine 60 via the network access unit 63 (step S32).

The license server 31 determines whether the accounting information corresponding to the content ID exist with reference to the price table, and if the accounting information cannot be obtained because the specified content ID is not registered in the price list (NO in step S33), the failure of the accounting is notified to the license vending machine 60 and the license vending machine 60 performs processing for the failure of the accounting (step S39).
As the processing for the failure of the accounting, a message such as "the content specified by the user does not exist" is displayed on the license vending machine 60, or the user is notified by sound.

On the other hand, if the accounting information is successfully obtained (YES in step S33), the accounting information is obtained by referring to the price table and aggregating a content price corresponding to the content ID, commission charge, consumption tax and others, and the accounting ID and the accounting information is transmitted to the corresponding accounting server 32 (or the accounting server corresponding to the identification information if the identification information of the accounting server is specified) (step S34).
At this point, after obtaining the accounting information, instead of immediately sending to the accounting server 32, the obtained accounting information may be presented to the content reproduction device 10 to ask for user's permission for the accounting, and the accounting ID and the accounting information may be sent to the accounting server 32 as soon as the permission is input by the user.

The accounting server 32 performs the accounting processing as is the case with the embodiment 1, and if the accounting fails (NO in step S35), the notification of the failure of the accounting is transmitted to the license vending machine 60 via the license server 31 and the license vending machine 60 receives the notification and performs processing for the failure of the accounting (step S39). As the processing for the failure of the accounting at this point, the user is notified of a reason why the accounting cannot be performed (e.g., the remaining amount possessed by the user is lower than the purchase amount necessary for purchasing a license).

On the other hand, if the accounting server 32 succeeds in the accounting processing (YES in step S35), the accounting server 32 notifies the license server 31 of the success of the accounting (step S36).
The license server 31 refers to the price table to pick up and return the decoding information corresponding to the content ID specified by the user to the license vending machine 60 (step S37).
The license vending machine 60 writes the obtained decoding information into the license card 70 via the license card access unit 61 (step S38). When writing the decoding information into the license card 70, if the content ID is already recorded, the decoding information is written correspondingly to the content ID, or if the content ID is not recorded yet, the content ID and the decoding information are written in a corresponding manner.

In the accounting system using the license card configured as above, the content reproduction device is not necessarily connected to the communication network.

The license vending machine 60 may hold the price table for contents to be sold (titles, content IDs, decoding information and accounting information of contents) in advance and the price table may be updated from the license server 31 at appropriate intervals. By configuring in this way, the license vending machine 60 does not have to access the license server 31 each time the content are sold.
In this configuration, if the license purchase is instructed by the user, the accounting processing is performed by sending the content ID of the specified content, the accounting information and the accounting ID of the license card directly to the accounting server and the decoding information is recorded into the license card depending on the result.

In the embodiments 1 to 3 described above, since the money information is recorded in the accounting server and only the accounting ID is recorded in the prepaid card or the license card, the card cannot be used by itself and it is difficult to counterfeit the card.
Also, when reading the accounting ID from the card, the accounting ID may be input by the user. In this case, the prepaid card or the license card is configured such that the accounting ID is displayed on the card in characters or symbols and the user inputs the accounting ID. It is preferred that the accounting ID on the prepaid card cannot be seen until the user obtains the card, as is the case of a scratch-off card and the like.
Further, a money-applied prepaid card or license card may be used for sales promotion and may be bundled in advance and sold with a content reproduction device or paid content.

### <Modification 1>

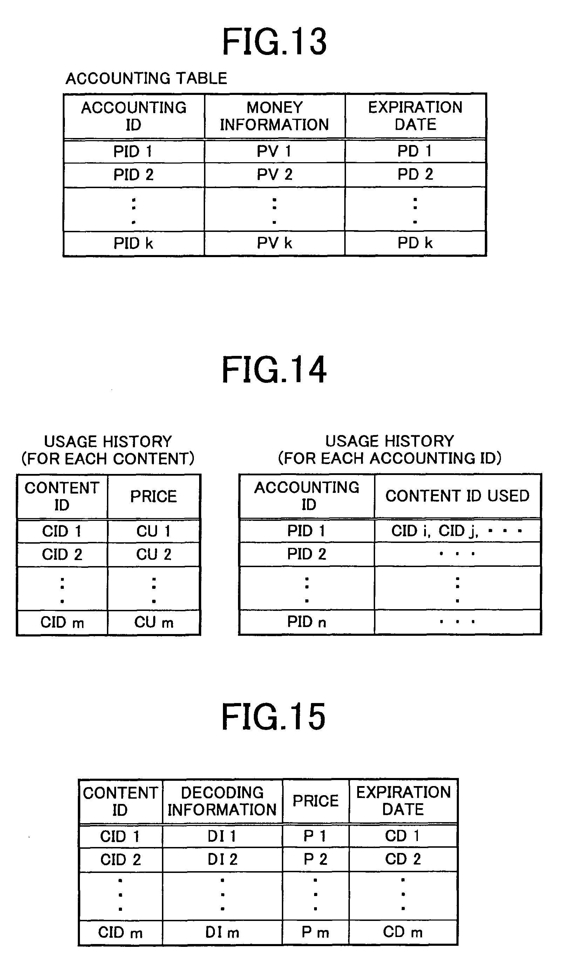

In the embodiments described above, an expiration date may be set to the accounting ID recorded in the prepaid card or license card.
In this case, for example, as shown in Fig. 13, the accounting server 32 stores an accounting table which makes the accounting IDs correspond to the money information and the expiration dates.
When the accounting request is sent from the license server 31 or the license vending machine 60, the expiration date is determined first and the accounting processing is performed only when the expiration date is valid. As the accounting ID, an accounting ID with high redundancy is preferably used for ensuring that coincidence cannot occur when a random accounting ID is input.

### <Modification 2>

In the embodiments and modification described above, the license server 31 records a usage history of the content.
In this case, for example, as shown in Fig. 14, as the usage history for each content, the number of times of usage is recorded for each content ID.
Also, as the usage history for each user, how many times and what content ID is used are recorded for each accounting ID.
By gathering and presenting the usage histories in appropriate cycles or as needed, since the content provider can comprehend a status of content usage, the usage histories can contribute to the improvement of the content quality and, moreover, the number of times of usage for each content ID can be used for distributing profits on the content provider side.
Although the usage history can make correspondence between the accounting ID and the content used, information does not exist for making the content correspond to the user and, therefore, privacy of the user can be maintained.

### <Modification 3>

In the embodiments and modifications described above, an expiration date may be set to the decoding information.
In this case, for example, as shown in Fig. 15, the price table of the license server 31 stores the decoding information, a price and the expiration date of the content for each content ID.
In the case of the embodiments 1 and 2, when the license server 31 notifies the content reproduction device 10 of the decoding information, the expiration date of the content is also included and notified. The content reproduction device 10 stores the received expiration date correspondingly to the content into the accumulation unit and determines the expiration date before decoding the encrypted content, such that the expired content cannot be used. Also, instead of the expiration date, the number of times of usage may be used in the same manner.

In the case of the embodiment 3, when the license vending machine 60 writes the decoding information into the license card 70, the expiration date of the content is also included to be written. The content reproduction device 10 determines the expiration date before decoding the encrypted content, such that the expired content cannot be used. Also, instead of the expiration date, the number of times of usage may be used in the same manner.

If regeneration cannot be performed because of expiration of the expiration date or the number of times of usage, the accounting processing must be performed again.
In this case, the license server 31 may record the usage history for each accounting ID, and when the decoding information is obtained from the content reproduction device 10 or the license vending machine 60, it may be determined whether the content ID has a purchase history or not, and a reduced accounting amount may be applied if applicable.

### <Modification 4>

In the embodiments and modifications described above, although the accounting information (price table) of the contents is maintained in the license server 31, in the case such that the license server 31 and the accounting server 32 are operated by the same company, the accounting server 32 may maintain the price table making correspondence between the content ID and the accounting information; the license server 31 may only send the accounting ID and the content ID as the information sent to the accounting server 32; and when the accounting server 32 performs the accounting processing, the accounting information (accounting amount) may be obtained from the content ID to determine whether the accounting can be performed or not.

### <Other embodiments>

The present invention is not limited to the embodiments described above. It is needless to say that the purpose of the present invention is achieved by respectively programming and preliminarily writing into a recording medium each function constituting the content reproduction device, license server, accounting server and license vending machine of the embodiments described above and by executing the program with a microprocessor.
In this case, the functions of the embodiments described above is achieved by the state of the program read from the recording medium and executed, and the program and the recording medium recording the program also constitute the present invention.

The program realizing such functions may be provided by a recording medium in the form of any one of a semiconductor medium (e.g., ROM, nonvolatile memory and others), an optical medium (e.g., DVD, MO, MD, CD and others), a magnetic medium (e.g., magnetic tape, flexible disk and others) and the like.
Alternatively, all or some of the program stored in a storage apparatus may be supplied directly from a server computer via a communication net such as network. In this case, the storage apparatus of this server computer is also included in the recording medium of the present invention.

The present invention is not limited to the embodiments described above and various modifications and, of course, alterations can be made within the scope not departing from the gist of the present invention.

### EXPLANATION OF REFERENCE NUMERALS

10...content reproduction device; 11...reception unit; 12...prepaid card access unit; 13...accumulation unit; 14...input unit; 15...control unit; 16...decoding unit; 17...content utilization unit; 18...network access unit; 19... recording medium drive apparatus; 20...license card access unit; 30, 30A, 30B...content selling company; 31, 31A, 31B...license server; 32, 32A, 32B...accounting server; 33, 33A...broadcast station; 34, 34B...content server; 40...communication network; 45...broadcast network; 50...prepaid card; 60...license vending machine; 61...license card access unit; 62...control unit; 63...network access unit; 70...license card; 101...user terminal; 102...PPC (prepaid card), 103...information provider; 112...PPC input unit; 115...determination unit; 117...signal processing unit; 118...display unit; and 119...accounting unit.

## Claims

1. An accounting system,
wherein a license server, an accounting server and a content reproduction device are connected through communication network,
wherein the content reproduction device reads out an accounting ID identifying money information from a prepaid card, transmits a content ID identifying an encrypted content and the accounting ID to obtain decoding information from the license server and decodes the encrypted content with the decoding information,
wherein the license server transmits an accounting amount obtained from the received content ID and the accounting ID to obtain an accounting result from the accounting server and returns decoding information corresponding to the content ID if the accounting result is the success of the accounting, and
wherein if money information corresponding to the received accounting ID is larger than the received accounting amount, the accounting server subtracts the accounting amount from the money information and returns the success of the accounting.

2. An accounting system,
wherein a license server, an accounting server and a content reproduction device are connected through communication network,
wherein the content reproduction device reads out an accounting ID identifying money information from a prepaid card, transmits a content ID identifying an encrypted content and the accounting ID to obtain decoding information from the license server and decodes the encrypted content with the decoding information,
wherein the license server transmits the received content ID and accounting ID to obtain an accounting result from the accounting server and returns decoding information corresponding to the content ID if the accounting result is the success of the accounting, and
wherein if money information corresponding to the received accounting ID is larger than the accounting amount obtained from the received content ID, the accounting server subtracts the accounting amount from the money information and returns the success of the accounting.

3. An accounting system comprising a content reproduction device, a license server, an accounting server and a license vending machine,
wherein the license server, the accounting server and the license vending machine are connected through communication network,
wherein when the license vending machine reads a license card and decoding information does not exist for a content ID identifying an encrypted content, the license vending machine reads out an accounting ID identifying money information and the content ID from the license card, transmits the content ID and the accounting ID to obtain decoding information from the license server and records the decoding information correspondingly to the content ID into the license card,
wherein the content reproduction device reads the license card, obtains decoding information corresponding to a content ID identifying an encrypted content and decodes the encrypted content with the decoding information,
wherein the license server transmits an accounting amount obtained from the received content ID and the accounting ID to obtain an accounting result from the accounting server and returns decoding information corresponding to the content ID if the accounting result is the success of the accounting, and
wherein if money information corresponding to the received accounting ID is larger than the received accounting amount, the accounting server subtracts the accounting amount from the money information and returns the success of the accounting.

4. An accounting system comprising a content reproduction device, a license server, an accounting server and a license vending machine,
wherein the license server, the accounting server and the license vending machine are connected through communication network,
wherein when the license vending machine reads a license card and decoding information does not exist for a content ID identifying an encrypted content, the license vending machine reads out an accounting ID identifying money information and the content ID from the license card, transmits the content ID and the accounting ID to obtain decoding information from the license server and records the decoding information correspondingly to the content ID into the license card,
wherein the content reproduction device reads the license card, obtains decoding information corresponding to a content ID identifying an encrypted content and decodes the encrypted content with the decoding information,
wherein the license server transmits the received content ID and accounting ID to obtain an accounting result from the accounting server and returns decoding information corresponding to the content ID if the accounting result is the success of the accounting, and
wherein if money information corresponding to the received accounting ID is larger than the accounting amount obtained from the received content ID, the accounting server subtracts the accounting amount from the money information and returns the success of the accounting.

5. The accounting system of claim 3 or 4, wherein when a content ID of an encrypted content specified by a user does not exist in the license card, the content reproduction device records the content ID into the license card.

6. The accounting system of any one of claims 1 to 5, wherein the exchange of data through the communication network is performed with encryption.

7. The accounting system of any one of claims 1 to 6, wherein the accounting ID and/or the decoding information are provided with an expiration date.

8. The accounting system of any one of claims 1 to 7, wherein the license server records a content ID of a content used for each accounting ID as a usage history.

9. The accounting system of any one of claims 1 to 8, wherein the license server records the number of times of usage for each content ID as a usage history.

10. A content reproduction device decoding and using an encrypted content, wherein the device comprises a prepaid card access unit for reading an accounting ID identifying money information from a prepaid card, an input unit for converting an encrypted content specified by a user into a content ID, and a decoding unit for transmitting the accounting ID and the content ID to obtain decoding information in return for the accounting and to decode the encrypted content with the decoding information.

11. A license vending machine comprising a license card read unit for reading a content ID of an encrypted content and corresponding decoding information recorded in a license card, and a license card write unit for reading out an accounting ID identifying money information and the content ID from the license card, for transmitting the content ID and the accounting ID to obtain decoding information and for recording the decoding information correspondingly to the content ID when the decoding information does not exist.

12. A program operable to drive a computer to execute a function of the accounting system described in any one of claims 1 to 9, a function of the content reproduction device described in claim 10 or a function of the license vending machine described in claim 11.

13. A computer-readable recording medium recording thereon the program defined in claim 12.
